# EUROPÄISCHE PATENTSCHRIFT

(11) **EP 3 473 568 B1**
(45) Veröffentlichungstag und Bekanntmachung des Hinweises auf die Patenterteilung: **17.03.2021**
(21) Anmeldenummer: 17199520.2
(22) Anmeldetag: 01.11.2017
(51) Int. Cl.: B65G 69/00

(54) **LADETOREINRICHTUNG**
LOADING GATE DEVICE
DISPOSITIF FORMANT PORTIQUE DE CHARGEMENT

(30) Priorität: 19.10.2017 DE 202017106331 U
(43) Veröffentlichungstag der Anmeldung: 24.04.2019
(73) Patentinhaber: Mengel, Herbert, 37284 Waldkappel (DE)
(72) Erfinder: Mengel, Herbert, 37284 Waldkappel (DE)
(74) Vertreter: Patentanwälte Walther Hinz Bayer PartGmbB

(56) Entgegenhaltungen:
- EP-A1- 3 016 897
- EP-A2- 0 258 779
- EP-A2- 1 013 870
- DE-A1- 2 927 233
- US-A- 4 478 268

## Beschreibung

Die Erfindung betrifft eine Ladetoreinrichtung mit einem an einer Gebäudewand angeordneten Vorbau mit einer Ladetorabdichtung, wobei die Ladetorabdichtung mindestens eine an dem Vorbau angeordnete schwenkbare Schürzenanordnung und eine Rolloeinrichtung aufweist, wobei die Rolloeinrichtung hinter der Schürzenanordnung in dessen Schwenkbereich pendelnd am Vorbau angeordnet ist.

Ladetoreinrichtungen sind aus dem Stand der Technik hinreichend bekannt. Ladetoreinrichtungen finden sich an Gebäuden wieder, die der Lagerung der unterschiedlichsten Güter dienen. An derartige Ladetoreinrichtungen fahren LKW rückwärts zum Be- und Entladen heran. Da das Gebäude während des Ladevorganges zumindest im Bereich der Ladetoreinrichtung offen ist, um eben den Lade- und Entladevorgang bewerkstelligen zu können, ist eine Ladetorabdichtung vorgesehen, um zu verhindern, dass ein übermäßiger Luftaustausch zwischen dem Gebäudeinnenraum und der äußeren Umgebung stattfindet.

Ebenfalls ist bekannt, an der freien Stirnseite des in der Ansicht U-förmigen Vorbaus an den Stegen und den die Stege im Dachbereich verbindenden Gurt Schürzen vorzusehen, die in den durch den Vorbau umschlossenen Raum hineinragen. Örtlich gesehen hinter den Schürzen, also in Einfahrrichtung des LKWs hinter den Schürzen, befindet sich eine Rolloeinrichtung, die der Abdichtung der Gebäudeöffnung dient. Hieraus wird deutlich, dass der LKW lediglich an die Schürzen heranfahren kann, beziehungsweise die Schürzen nur so weit mit seinem Kastenaufbau in Richtung auf die Gebäudewand verschwenken kann, dass die Rolloeinrichtung, die starr im Vorbau verlaufend angeordnet ist, durch die Schwenkbewegung der Schürzen nicht beschädigt wird. Das heißt, dass selbst bei in den Vorbau eingefahrenem LKW keine optimale Abdichtung zu erzielen ist, da zwischen Rolloeinrichtung und Schürzen einerseits und dem Kastenaufbau des LKWs andererseits sicherheitshalber immer Spalte nennenswerter Größe bestehen, die einen ungewollten Luftaustausch ermöglichen.

Aus der EP 3 016 897 A1 ist eine Ladetorabdichtung der eingangs genannten Art bekannt, wobei ein Schwenkarm vorgesehen ist, der ein tuchartiges Dichtelement zur Anlage auf dem Dach eines LKW's aufweist. Der Schwenkarm ist an einem Halter der Ladetoreinrichtung angeordnet, wobei der Halter einen vertikal ausgerichteten Vorhang aufweist, der vor dem Dichtelement auf dem Dach des LKW aufliegt. Das Dokument EP 3 016 897 A1 offenbart eine Ladetoreinrichtung nach dem Oberbegriff des Anspruchs 1.

Die der Erfindung zugrundeliegende Aufgabe besteht nun darin durch die erfindungsgemäße Ladetoreinrichtung eine verbesserte Abdichtung zu erzielen.

Zur Lösung der Aufgabe dienen erfindungsgemäß die Merkmale des kennzeichnenden Teils des Anspruchs 1 in Verbindung mit den Merkmalen des Oberbegriffs. Die Ladetoreinrichung umfasst eine Rolloeinrichtung, die hinter der Schürzenanordnung in deren Schwenkbereich pendelnd am Vorbau angeordnet ist. Das heißt, dass die Rolloeinrichtung sich näher an der Gebäudewand befindet als die Schürzenanordnung. Hieraus wird folgendes deutlich: Der LKW kann mit seinem Kastenaufbau rückwärts in den in der Ansicht im Wesentlichen U-förmigen Vorbau einfahren, wobei hierbei die Schürzenanordnung mit vorteilhaft zwei Seitenschürzen und einer Kopfschürze in Richtung der Gebäudewand verschwenkt. Dies soweit, bis die Schürzen der Schürzenanordnung in Kontakt mit der Rolloeinrichtung gelangen. Es besteht bedingt durch die pendelnde Aufhängung der Rolloeinrichtung die Möglichkeit, ohne eine Beschädigung der Rolloeinrichtung die Schürze so weit durch den Kastenaufbau des LKW zu verschwenken, bis auch die Rolloeinrichtung verschwenkt wird, da dann die Rolloeinrichtung zusammen mit den Schürzen eine im Wesentlichen spaltfreie Abdeckung ermöglicht.

Die Rolloeinrichtung umfasst ein Rollotuch und eine motorbetriebene Welle zum Auf- und Abwickeln des Rollotuches. Der Motor, insbesondere ein Elektromotor, ist in der Welle angeordnet. Steht somit das Rollotuch der Rolloeinrichtung in Kontakt mit der oder den Schürzen, kann das Rollotuch aufgrund der pendelnden Aufhängung der Rolloeinrichtung gleichwohl abgewickelt werden, wobei hierbei das Rollotuch an den Schürzen entlang gleitet, bis es auf dem Dach des Kastenaufbaues des LKW anliegt.

Es wurde bereits darauf hingewiesen, dass die Rolloeinrichtung elektromotorisch betätigbar ist. Die Rolloeinrichtung umfasst hierzu eine Welle, wobei in der Welle der Elektromotor als sogenannter Rohrmotor untergebracht ist. In diesem Zusammenhang ist vorgesehen, dass die Welle der Rolloeinrichtung durch endseitige Halterungen mit einer Traverse verbunden ist, die durch Ketten, Seile oder ähnliches pendelnd an dem Vorbau im Bereich der Decke des Vorbaus aufgehängt ist. Die Welle des Elektromotors wird hierbei vorteilhaft durch zumindest eine Halterung drehfest erfasst, sodass sichergestellt ist, dass sich die Welle zum Auf- und Abwickeln des Rollotuches dreht.

Weitere vorteilhafte Merkmale und Ausgestaltungen der Erfindung ergeben sich aus den Unteransprüchen.

Das Rollotuch wird hierbei vorteilhaft durch mindestens einen mit einem Elastomer beschichteten Festigkeitsträger, z. B. einem Gewebe, gebildet. Gleiches gilt für die Seitenschürzen wie auch die Kopfschürze, die ebenfalls vorteilhaft aus mindestens einem Festigkeitsträger ausgebildet sind, z. B. einem Gewebe, das mit einem Elastomer beschichtet ist.

So ist insbesondere vorgesehen, dass der Vorbau nach Art eines Gehäuses ausgebildet ist, mit zumindest einem U-förmigen Frontrahmen, der an der Gebäudewand in Richtung der Gebäudewand nachgiebig beweglich gelagert ist. Das heißt, dass dann, wenn der LKW rückwärts in den Vorbau einfährt und er hierbei in Kontakt mit dem Frontrahmen gelangt, dieser bis zu einem gewissen Grade ausweichen kann, ohne dass der Vorbau bzw. der im Wesentlichen U-förmige Frontrahmen hierbei Schaden nimmt. Das Gehäuse weist vorteilhaft seitlich eine umlaufende Abdeckung, z. B. aus einem PVC-Tuch auf, um das Innere des Gehäuses gegen Witterungseinflüsse abzuschirmen.

Um zu gewährleisten, dass das Rollotuch auf der Welle ordentlich auf- und abwickelbar ist, ist vorgesehen, dass das Rollotuch an seinem unteren freien Ende einen gegenüber dem übrigen Rollotuch verstärkten Rolloschürzenabschnitt aufweist, der insofern als zusätzliches Gewicht am freien Ende des Rollotuches, wie bereits ausgeführt, einen entsprechend ausgeführten Auf- und Abwickelvorgang unterstützt.

Anhand der Zeichnungen wird die Erfindung nachstehend beispielhaft näher erläutert.
- Figur 1: zeigt hierbei eine perspektivische Ansicht auf die Ladetoreinrichtung mit der Ladetorabdichtung;
- Figur 2: zeigt eine Seitenansicht auf die Ladetoreinrichtung;
- Figur 3: zeigt die Rolloeinrichtung.

Die mit 1 bezeichnete Ladetoreinrichtung befindet sich an der Gebäudewand 3. Die Ladetoreinrichtung umfasst den Vorbau 5, wobei der Vorbau 5 die Ladetorabdichtung 10 aufnimmt. Der Vorbau 5 umfasst den insgesamt mit 6 bezeichneten U-förmigen Frontrahmen, wobei der Frontrahmen 6 durch zu beiden Seiten angeordnete parallel zueinander verlaufende Schwenkarme 7 mit der Gebäudewand 3 verbunden ist. Die Verbindung zwischen der Gebäudewand und den Schwenkarmen 7 einerseits sowie die Verbindung der Schwenkarme 7 mit den U-förmigen Frontrahmen und hier den vertikalen Stegen 6a, 6b des Frontrahmens andererseits ist gelenkig gehalten, sodass bei Krafteinwirkung in Richtung des Pfeils 8 der Frontrahmen in dieser Richtung ähnlich einem Parallelogrammlenker ausweichen kann. Der mit 6 bezeichneten U-förmige Frontrahmen ist ebenfalls seitlich U-förmig umlaufend durch eine PVC-Folie 9 mit der Gebäudewand 3 verbunden, sodass sich ein seitlicher im Wesentlichen abgedichteter Vorbau 5 ergibt.

Der U-förmige Frontrahmen 6 nimmt die insgesamt mit 11 bezeichnete Schürzenanordnung auf. Die Schürzenanordnung 11 umfasst die an den Stegen 6a, 6b des Frontrahmens 6 angeordneten Seitenschürzen 12, sowie die an dem Gurt 6c des U-förmigen Frontrahmens 6 angeordnete Kopfschürze 14. Die Schürzen selbst sind aus einem mit einem Elastomer beschichteten Festigkeitsträger ausgebildet, sodass sie flexibel sind. Das heißt, wenn beispielsweise ein LKW mit seinem Kastenaufbau gegen die Schürzenanordnung 11 anstößt, dann werden sich die Schürzen in Richtung des Pfeils 8 auf die Gebäudewand 3 zu verschwenken.

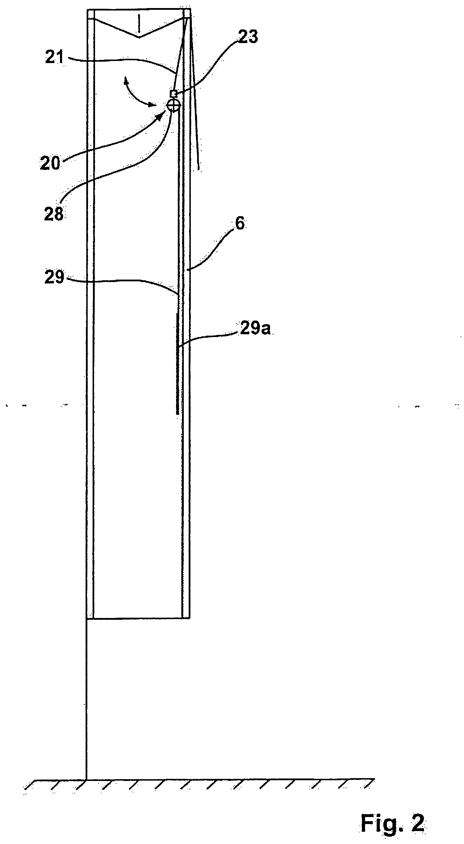

An dem Gurt 6c ist nun durch Ketten 21 die insgesamt mit 20 bezeichnete Rolloeinrichtung pendelnd aufgehängt (Figur 2)

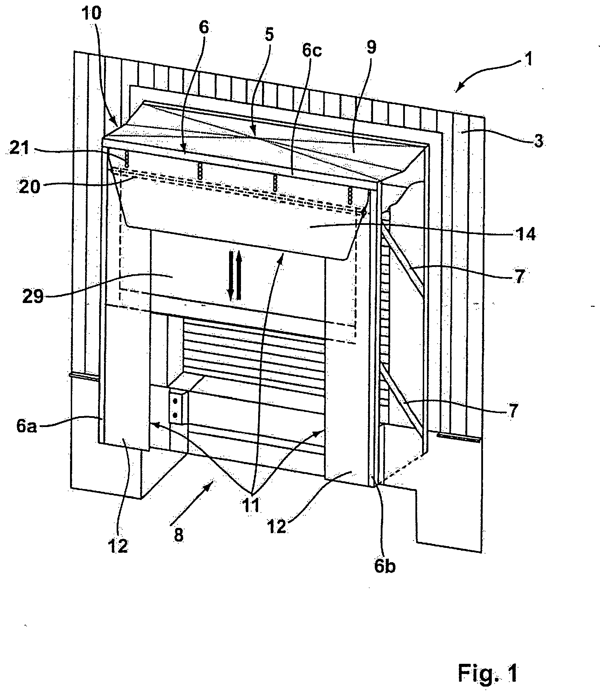

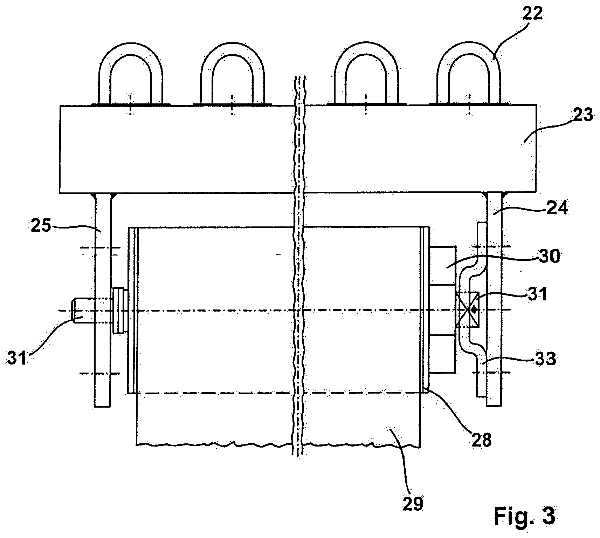

Die Ausbildung der Rolloeinrichtung ergibt sich im Einzelnen in Anschauung von Figur 3. So ist eine Traverse 23 vorgesehen, die über Hängeösen 22 verfügt, die der Aufnahme der Ketten 21 zur Verbindung mit dem Gurt 6c dienen. Die Traverse 23 weist darüber hinaus zwei Halterungen 24 und 25, die der Aufnahme der Welle 28 dienen. Die Welle 28 dient der Aufnahme des Rollotuches 29 (Figur 1). Die Welle 28 weist einen von der Welle aufgenommen Elektromotor 30 auf, der insofern als Rohrmotor ausgebildet ist. Die Motorwelle 31 des Elektromotors 30 ist durch einen Bügel 33 formschlüssig erfasst, wobei der Bügel 33 an der Halterung 24 angeordnet ist.

Das Rollotuch weist am unteren Ende eine verstärkte Rollotuchschürze 29a auf, die zum einen als zusätzliches Gewicht den Auf- und Abwickelvorgang unterstützt und zum anderen als Verschleißschutz dient.

Die Halterung 25 trägt das andere, entgegengesetzte Ende der Motorwelle 31. Wenn insofern die Motorwelle 31 festgehalten ist, dann dreht sich zum Auf- und Abwickeln des Rollotuches 29 die Welle 28.

Die Funktionsweise der Ladetorabdichtung 10 stellt sich wie folgt dar: Der LKW fährt rückwärts mit seinem Kastenaufbau an die Schürzenanordnung 11 und verschwenkt hierbei zumindest die Seitenschürzen 12 der Schürzenanordnung 11 gegebenenfalls allerdings auch die Kopfschürze 14 bei entsprechender Höhe des Kastenaufbaues. Das heißt, dass der durch den Vorbau 5 gebildete Raum insofern durch die Schürzenanordnung 11 einerseits und den Kastenaufbau des LKW zumindest partiell abgedichtet ist. Reicht nun der Kastenaufbau nicht bis an die Kopfschürze heran, so kann das Rollotuch 29 der Rolloeinrichtung 20 von der Welle 28 abgewickelt werden, bis diese in Kontakt mit dem Dach des Kastenaufbaus des LKW gelangt. Insofern wird deutlich, dass eine gegenüber dem Stand der Technik wesentlich verbesserte Abdichtung erfolgt; denn beim Stand der Technik ist es so, dass die Schürzenanordnung 11 mit den Seitenschürzen 12 und der Kopfschürze 14 im Wesentlichen nicht oder nur geringfügig verschwenkt werden kann, da andernfalls die Gefahr der Beschädigung der hinter der Schürzenanordnung 11 angeordneten Rolloeinrichtung 20 besteht, die starr an dem Vorbau, und hier insbesondere an dem U-förmigen Frontrahmen 6 angeordnet ist. Um insofern mit Sicherheit eine Beschädigung der Rolloeinrichtung 20 zu vermeiden, wurde nach dem Stand der Technik darauf geachtet, dass die LKWs mit ihrem Kastenaufbau lediglich bis an die Schürzenanordnung 11 herangefahren sind, wobei dann häufig immer noch ein Spalt zwischen Kastenaufbau und Schürzenanordnung bestand, der den nicht gewünschten Luftaustausch begünstigt hat.

### Bezugszeichenliste:

- 1: Ladetoreinrichtung
- 3: Gebäudewand
- 5: Vorbau
- 6: Frontrahmen
- 6a: Steg des Frontrahmens
- 6b: Steg des Frontrahmens
- 6c: Gurt des Frontrahmens
- 8: Pfeil
- 9: PVC-Folie
- 10: Ladetorabdichtung
- 11: Schürzenanordnung
- 12: Seitenschürze
- 14: Kopfschürze
- 20: Rolloeinrichtüng
- 21: Kette
- 22: Hängeösen
- 23: Traversen
- 24: Halterung
- 25: Halterung
- 28: Welle
- 29: Rollotuch
- 29a: Rollotuchschürze
- 31: Motorwelle
- 33: Bügel

## Patentansprüche

1. Ladetoreinrichtung (1) mit einem an einer Gebäudewand (3) angeordneten Vorbau (5) mit einer Ladetorabdichtung (10), wobei die Ladetorabdichtung (10) mindestens eine an dem Vorbau (5) angeordnete schwenkbare Schürzenanordnung (11) und eine Rolloeinrichtung (20) aufweist,
wobei die Rolloeinrichtung (20) hinter der Schürzenanordnung (11) in dessen Schwenkbereich pendelnd am Vorbau (5) angeordnet ist,
**dadurch gekennzeichnet,**
**dass**
die Rolloeinrichtung (20) ein Rollotuch (29) und eine durch einen Elektromotor (30) betriebene Welle (28) zum Auf- und Abwickeln des Rollotuches (29) umfasst, und dass die Welle (28) der Rolloeinrichtung (20) durch endseitige Halterungen (24, 25) mit einer Traverse (23) verbunden ist, die durch Ketten (21), Seile oder ähnliches pendelnd an dem Vorbau (5) aufgehängt ist.

2. Ladetoreinrichtung nach Anspruch 1, **dadurch gekennzeichnet,**
**dass** die Schürzenanordnung (11) zwei schwenkbare Seitenschürzen (12) und eine schwenkbare Kopfschürze (14) umfasst, die vor der Rolloeinrichtung (20) am Vorbau (5) angeordnet sind.

3. Ladetoreinrichtung nach einem der voranstehenden Ansprüche, **dadurch gekennzeichnet,**
**dass** sowohl die Seitenschürzen (12) als auch die Kopfschürze (14) mindestens einen Festigkeitsträger, zum Beispiel ein Gewebe aufweisen, das mit einem Elastomer beschichtet ist.

4. Ladetoreinrichtung nach einem der voranstehenden Ansprüche, **dadurch gekennzeichnet,**
**dass** der Vorbau (5) nach Art eines Gehäuses ausgebildet ist, mit zumindest einem U-förmigen Frontrahmen (6), der in Richtung der Gebäudewand (3) nachgiebig gelagert ist.

5. Ladetoreinrichtung nach Anspruch 4, **dadurch gekennzeichnet,**
**dass** das Gehäuse eine umlaufende Abdeckung, zum Beispiel eine PVC-Folie (9), gegen Witterungseinflüsse aufweist.

6. Ladetoreinrichtung nach einem der voranstehenden Ansprüche, **dadurch gekennzeichnet,**
**dass** das Rollotuch (29) an seinem unteren freien Ende eine gegenüber dem übrigen Rollotuch (29) verstärkte Rollotuchschürze aufweist.

7. Ladetoreinrichtung nach einem der voranstehenden Ansprüche, **dadurch gekennzeichnet,**
**dass** das Rollotuch (29) mindestens einen Festigkeitsträger, zum Beispiel ein Gewebe aufweist, das mit einem Elastomer beschichtet ist.

8. Ladetoreinrichtung nach einem der voranstehenden Ansprüche, **dadurch gekennzeichnet,**
**dass** die Welle (28) des Elektromotors (30) durch zumindest eine Halterung (24, 25) drehfest erfasst ist.

## Claims

1. A loading gate device (1) having a porch (5) arranged at a building wall (3) comprising a loading gate seal (10), wherein the loading gate seal (10) has at least one pivotable skirting arrangement (11) arranged at the porch (5) and a roll down screen (20),
wherein the roll down screen (20) is arranged in an oscillating manner at the porch (5) behind the skirting arrangement (11) in its pivot region,
**characterized in that**
the roll down screen (20) comprises a roll down fabric (29) and a shaft (28) operated by an electric motor to wind up and unwind the rolldown fabric (29); and **in that** the shaft (28) of the roll down screen (20) is connected by end-side holders (24, 25) to a crossbeam (23) that is suspended in an oscillating manner at the porch (5) by chains (21), cables or similar.

2. A loading gate device in accordance with claim 1,
**characterized in that**
the skirting arrangement (11) comprises two pivotable side skirts (12) and one pivotable top skirt (14) that are arranged in front of the roll down screen (20) at the porch (5).

3. A loading gate device in accordance with one of the preceding claims,
**characterized in that**
both the side skirts (12) and the top skirt (14) have at least one reinforcement, for example a textile, that is coated with an elastomer.

4. A loading gate device in accordance with one of the preceding claims,
**characterized in that**
the porch (5) is configured in the manner of a housing having at least one U-shaped front frame (6) that is supported in a yielding manner in the direction of the building wall (3).

5. A loading gate device in accordance with claim 4,
**characterized in that**
the housing has a peripheral cover, for example a PCV film (9), against the effects of weather.

6. A loading gate device in accordance with one of the preceding claims,
**characterized in that**
the roll down fabric (29) has a roll down fabric skirt reinforced with respect to the remaining roll down fabric (29) at its lower free end.

7. A loading gate device in accordance with one of the preceding claims,
**characterized in that**
the roll down fabric (29) has at least one reinforcement, for example a textile, that is coated with an elastomer.

8. A loading gate device in accordance with one of the preceding claims,
**characterized in that**
the shaft (28) of the electric motor (30)s is rotationally fixedly gripped by at least one holder (24, 25).

## Revendications

1. Dispositif formant porte de chargement (1) comprenant une avancée (5) placée sur une paroi de bâtiment (3) dotée d'un élément d'étanchéité de porte de chargement (10), l'élément d'étanchéité de porte de chargement (10) comportant au moins un agencement de tablier (11) pivotant placé sur l'avancée (5) et un dispositif de store (20),
le dispositif de store (20) étant placé sur l'avancée (5) de manière flottante, derrière l'agencement de tablier (11) dans la zone de pivotement de celui-ci,
**caractérisé en ce que**
le dispositif de store (20) comprend une toile de store (29) et un arbre (28) actionné par un moteur électrique (30) pour enrouler et dérouler la toile de store (29), et **en ce que** l'arbre (28) du dispositif de store (20) est relié à une traverse (23) par des fixations (24, 25) aux extrémités, ladite traverse étant accrochée à l'avancée (5) de manière flottante par des chaînes (21), des cordes ou similaires.

2. Dispositif formant porte de chargement selon la revendication 1,
**caractérisé en ce que**
l'agencement de tablier (11) comprend deux tabliers latéraux (12) pivotants et un tablier supérieur (14), qui sont placés sur l'avancée (5) devant le dispositif de store (20).

3. Dispositif formant porte de chargement selon l'une des revendications précédentes,
**caractérisé en ce que**
aussi bien les tabliers latéraux (12) que le tablier supérieur (14) comportent au moins un élément apportant de la solidité, par exemple un tissu, qui est revêtu d'élastomère.

4. Dispositif formant porte de chargement selon l'une des revendications précédentes,
**caractérisé en ce que**
l'avancée (5) est réalisée à la manière d'une cage, avec au moins un cadre avant (6) en forme de U, qui est monté de manière flexible en direction de la paroi de bâtiment (3).

5. Dispositif formant porte de chargement selon la revendication 4,
**caractérisé en ce que**,
la cage comporte un organe de recouvrement périphérique, par exemple une feuille en PVC (9), contre les effets du climat.

6. Dispositif formant porte de chargement selon l'une des revendications précédentes,
**caractérisé en ce que**,
la toile de store (29) comporte, à son extrémité inférieure libre, un tablier de toile de store renforcé par rapport au reste de la toile de store (29).

7. Dispositif formant porte de chargement selon l'une des revendications précédentes,
**caractérisé en ce que**,
la toile de store (29) comporte au moins un élément apportant de la solidité, par exemple un tissu, qui est revêtu d'élastomère.

8. Dispositif formant porte de chargement selon l'une des revendications précédentes,
**caractérisé en ce que**,
l'arbre (28) du moteur électrique (30) est saisi de manière bloquée en rotation par au moins une fixation (24, 25).
